# EUROPÄISCHE PATENTSCHRIFT

(11) **EP 3 016 824 B1**
(45) Veröffentlichungstag und Bekanntmachung des Hinweises auf die Patenterteilung: **14.11.2018**
(21) Anmeldenummer: 14714241.8
(22) Anmeldetag: 27.03.2014
(51) Int. Cl.: B60R 25/20, B60R 25/24, E05B 81/78

(54) **VERFAHREN ZUR ERFASSUNG EINER FUNKTIONSBETÄTIGUNG AN FAHRZEUGEN**
METHOD FOR DETECTING A FUNCTION ACTUATION ON VEHICLES
PROCÉDÉ PERMETTANT DE DÉTECTER UN ACTIONNEMENT D'UNE FONCTION SUR DES VÉHICULES

(30) Priorität: 03.07.2013 DE 102013106968; 18.09.2013 DE 102013110296
(43) Veröffentlichungstag der Anmeldung: 11.05.2016
(73) Patentinhaber: Huf Hülsbeck & Fürst GmbH & Co. KG, 42551 Velbert (DE)
(72) Erfinder: SCHINDLER, Mirko, 42549 Velbert (DE); VAN GASTEL, Peter, 42699 Solingen (DE); GERDES, Bernd, 45355 Essen (DE)
(74) Vertreter: Zenz Patentanwälte Partnerschaft mbB
(86) Internationale Anmeldenummer: PCT/EP2014/056227
(87) Internationale Veröffentlichungsnummer: WO 2015/000608

(56) Entgegenhaltungen:
- EP-A1- 1 733 937
- EP-A2- 0 770 749
- WO-A1-02/45030
- WO-A1-2011/026763
- WO-A1-2012/034768
- WO-A1-2012/108440
- DE-A1-102006 037 237
- DE-A1-102008 063 366
- DE-A1-102009 023 594
- DE-A1-102010 018 164
- DE-B3-102004 041 709
- US-B2- 8 091 280

## Beschreibung

Die Erfindung betrifft ein Erfassungsverfahren für Betätigungen einer Schalteinrichtung an einem Kraftfahrzeug. Insbesondere betrifft die Erfindung ein Verfahren, um von einem Benutzer zum Zwecke des Zugriffs auf eine Fahrzeugfunktion ausgeübte Betätigungsgesten zu detektieren.

Einrichtungen zur berührungslosen Betätigung von Kraftfahrzeugfunktionen sind aus dem Stand der Technik bekannt. Beispielsweise beschreibt die DE 10 2008 063 366 eine berührungslos betätigbare Heckklappe. Diese Einrichtung erlaubt es einem Benutzer, eine Betätigungsgeste im Fußbereich unter dem Heckstoßfänger auszuführen, um die Heckklappe zu öffnen. Dafür sind bei dieser Einrichtung Kapazitätssensoren vorgesehen, die mit ihrem Erfassungsbereich zur Erfassung unterschiedlicher Raumbereiche ausgerichtet sind, und anhand deren Signale eine Betätigungsgeste erfasst wird.

Eine solche berührungslose Betätigung einer Heckklappe ist dem Komfort und der Sicherheit zuträglich, wenn einer Person aus beliebigen Gründen die händische Betätigung einer Heckklappe nur erschwert möglich ist.

Die Erfassung einer Bewegung kann eine Körperbewegung, zum Beispiel das Ausführen einer angetäuschten Kick-Bewegung, das Anheben und Schwenken des Beines oder ähnliches umfassen. Es ist jedoch zu vermeiden, dass auch dann Betätigungen erkannt werden und eine Funktion ausgelöst wird, wenn gar nicht gezielt eine entsprechende Betätigungsgeste ausgeführt wurde. Dies kann beispielsweise durch in den Erfassungsbereich gelangende Objekte (Bälle, Haustiere oder ähnliches) geschehen.

Aus der DE 10 2004 041 709 ist eine Einrichtung zur berührungslosen Betätigung einer Heckklappe bekannt, wobei vorgeschlagen wird, zwei Sensoranordnungen mit getrennten Detektionsbereichen zu verwenden. Hierzu kann beispielsweise ein Ultraschall-Abstandserfassungssystem als eine der Sensoreinrichtungen verwendet werden, welches ohnehin am Kraftfahrzeug für Abstandsmessungen vorgesehen ist.

Die US 8091280 offenbart eine handfreie Betätigungseinrichtung, wobei eine optische Erfassung eines Fußes in einem optisch markierten Bereich vorgenommen wird.

Weitere Verfahren zur berührungslosen Betätigung von einer Schalteinrichtung an einem Kraftfahrzeug sind der WO 2012/108440 A1 und aus der WO 2011/026763 A1 zu entnehmen.

Die genannten Erfassungssysteme sind jedoch hinsichtlich der Betätigung in verschiedenen Bereichen unvorteilhaft. Wenn es einem Benutzer aufgrund von körperlichen Einschränkungen oder auch Vorgaben der Verhaltensweisen nicht möglich ist, eine entsprechende Bewegung auszuführen, sind diese Betätigungssysteme aufgrund der geforderten Dynamik der Bewegung nicht geeignet.

Aufgabe der Erfindung ist es, ein Erfassungs- und Auswerteverfahren für berührungslos betätigte Sensoranordnungen zur Verfügung zu stellen, welches die Erkennungsgenauigkeit erhöht und in bequemer und sicherer Weise durch Benutzer ausführbar ist.

Gelöst wird diese Aufgabe durch ein Verfahren mit den Merkmalen des Patentanspruchs 1.

Das erfindungsgemäße Verfahren zur Betätigungserfassung für eine Funktion an einem Kraftfahrzeug nutzt eine Sensoranordnung. Diese Sensoranordnung weist wenigstens einen Annäherungssensor zur Erfassung der Annäherung eines Bedieners oder eines seiner Körperteile auf. Der Annäherungssensor kann dabei eine beliebige Art von Annäherungssensor sein, z.B. ein optischer, kapazitiver oder induktiver Sensor. Der Sensor ist zur Ausgabe von Signalen ausgebildet, wobei die Signale für eine Annäherung oder allgemein eine Umgebungsveränderung im Bereich des Sensors repräsentativ sind. Ausgegeben werden können z.B. veränderliche Spannungswerte oder, z.B. bei Ausstattung des Sensors mit einer entsprechenden Wandlerschaltung, digitale Werte.

Mit dem Annäherungssensor ist eine elektronische Logik gekoppelt. Diese kann ggf. neben dem Annäherungssensor auch weitere Sensoren der Sensoranordnung ansteuern und auslesen. In dieser Logik wird das erfindungsgemäße Verfahren umgesetzt, z.B. unter Einsatz eines entsprechend programmierten Mikrocontrollers.

Die Schritte des erfindungsgemäßen Verfahrens werden nun erläutert.

Die Signale des Annäherungssensors werden kontinuierlich oder periodisch, mit einer vorgegebenen Abtastfrequenz (z.B. 100 Hz) auf eine Signalveränderung in Gestalt einer charakteristischen ersten Signalantwort s₁ überwacht. Für die Signalantworten ist für den Fall einer Nichtbedienung, also bei vollständiger Abwesenheit eines Bedieners, eine Signalantwort auf Niveau eines Ruhesignals zu erwarten. Geänderte allgemeine Umgebungsbedingungen (Witterung, Luftfeuchte etc.) weisen regelmäßig eine langsame Änderungsrate über mehrere Minuten oder zumindest einigen Sekunden auf, so dass das Niveau des Ruhesignals in der Steuer- und Auswertelogik nachgeführt werden kann. Dies kann z.B. durch eine gleitende Mittelung über die jeweils vergangenen Minuten erfolgen.

Eine Betätigung ruft hingegen eine kurzfristige, deutliche Signaländerung des Annäherungssensors hervor. Die genaue Quantität und der Verlauf der Signaländerung, hier als charakteristische Signalantwort bezeichnet, hängen von der Art und Installation des jeweiligen Sensors ab. Die Signaländerung s₁ kann sich z.B. in einem signifikanten Signalanstieg oder Signalabfall äußern. Änderungsrate und Betrag hängen hierbei von der Geschwindigkeit und dem Maß der erfolgten Annäherung durch den Bediener ab. Was eine charakteristische Signalantwort für einen bestimmten Sensortyp ist, ist dem Stand der Technik zu entnehmen oder durch einfache empirische Erprobung zu ermitteln. Bei kapazitiven Sensoren handelt es sich z.B. um eine signifikante Änderung der Kapazität einer Elektrodenanordnung (siehe z.B. WO2012/034768).

Wird eine solche Signalantwort s₁ erfasst, signalisiert der Annäherungssensor also eine Annäherung, so erfolgt erfindungsgemäß der Start eines Zeitgebers, also eine Triggerung einer Zeitmessung. Damit startet die sogenannte stationäre Phase des Bedienverfahrens. Von diesem Zeitpunkt der Annäherung an wird das Signal des Annäherungssensors weiter überwacht, und zwar für höchstens eine Zeitdauer tₛ (t-stationär). Erfolgt in dieser Zeit eine signifikante Signaländerung, insbesondere eine solche, die eine Entfernung von dem Annäherungssensor anzeigt, wird das Verfahren abgebrochen. Ändert sich also innerhalb der Zeitdauer tₛ das Signal um mehr als einen vorgegebenen Wert sₜ, so zeigt dies, dass die Annäherung aufgehoben, also nicht fortgesetzt wurde und damit keine Betätigung erwünscht ist. Eine gewisse Toleranz ist dabei einzuräumen, da ein Bediener nicht vollkommen bewegungslos in seiner Stellung verharren kann.

Nur wenn die Annäherung aufrecht erhalten wird, also z.B. die Hand, der Finger, der Arm, die Hüfte oder der Fuß in der angenäherten Position vor dem Sensor verharren, wird das Zeitintervall erfolgreich absolviert und mit dem Verfahren fortgefahren.

Ist dies der Fall, bleibt die Annäherung also für die Zeitdauer tₛ bestehen, wird eine Signaleinrichtung aktiviert.

Dies geschieht, um dem Bediener den Ablauf der stationären Betätigungszeit zu signalisieren. Die Signaleinrichtung ist ein beliebiger Signalgeber für eine menschliche Rezeption zu verstehen, es kann insbesondere eine optisch oder akustisch wahrnehmbare Einrichtung sein. Der Bediener muss diese Signaleinrichtung von seiner Position aus dem Betätigungsbereich, in welchem er sich befindet, heraus wahrnehmen können. Es können entsprechend am Fahrzeug vorhandene Signalmittel (Bremsleuchten, Blinker, Rückfahrleuchten akustische Einrichtungen etc.) verwendet werden oder solche, die extra zu diesem Zweck ausgebildet und ausschließlich dafür vorgesehen sind.

Der Benutzer hat durch seine stationäre, fortdauernde Annäherung für die Zeitdauer tₛ den Bedienwillen grundsätzlich signalisiert. Es ist jedoch wichtig, Fehlbedienungen zu reduzieren, die z.B. durch eine unbewusste Annäherung, ein Anlehnen, eine Berührung bei der Fahrzeugreinigung oder Fahrzeugpflege o.ä. entstehen können.

Dementsprechend wird dem Bediener ein Feedback zu der erfolgreich absolvierten Stationärphase gegeben. Damit wird signalisiert, dass nun die dynamische Phase des Bedienvorgangs eingeleitet wurde. Der Bediener ist damit aufgefordert, die Annäherung aufzuheben, also eine Entfernung von dem Annäherungssensor zu vollziehen. Alternativ kann auch vorgesehen sein, die Annäherung in anderer vorgegebener Weise zu verändern. Diese Veränderung hat jedoch erfindungsgemäß innerhalb einer vorgegebenen Maximalzeitdauer zu geschehen.

Hierfür werden die Signale des Annäherungssensors, beginnend mit der Signalisierung an den Bediener, in der dynamischen Phase für eine Zeitdauer tₑ überwacht. Das Verfahren zur Erkennung der Betätigung wird nämlich nur dann fortgesetzt, wenn sich das Signal des Annäherungssensors innerhalb der Zeitdauer tₑ um mehr als einen vorgegebenen Wert sₑ verändert.

Die Veränderung des Signals muss eine signifikante Änderung der Annäherung anzeigen, also z.B. eine Entfernung oder Wegnahme des angenäherten Körperteils. Durch die zeitliche Beschränkung in Verbindung mit der Signalisierung an den Benutzer wird eine Fehlbedienung weitgehend ausgeschlossen. Das Zeitfenster für die Entfernung wird entsprechend auf wenige Sekunden eingerichtet. Es ist unwahrscheinlich, dass eine Fehlerkennung erfolgt, da zur erfolgreichen Betätigung einerseits ein Annähern und Verharren für eine stationäre Phase der Zeitdauer tₛ erforderlich ist und eine Reaktion auf die Signalisierung innerhalb der Reaktions- oder Entfernungsphase tₑ.

Statt einer Entfernung des Körperteils als Reaktion kann auch eine andere Signaländerung gefordert werden. Z.B. kann für die stationäre Phase eine Annäherung vorzunehmen sein, die als Reaktion auf eine Signalisierung mit einer weiteren Annäherung, bis hin zu einer Berührung innerhalb der Frist für die dynamische Phase abzuschließen ist.

Wesentlich ist, dass die Bedienung anhand von wenigstens zwei Zeitvorgaben erkannt wird, nämlich einmal eine Zeitdauer tₛ, während der ein Bediener seinen Körperteil in einem Detektionsbereich belassen muss und einen Zeitbereich tₑ, innerhalb dessen der Körperteil nach Signalisierung durch das Auto in seiner Lage verändert, z.B. wieder entfernt, werden muss.

Wenn diese Vorgaben erfolgreich eingehalten wurden, wird das Verfahren fortgesetzt und die Betätigung der Funktion an dem Kraftfahrzeug wird einer Steuereinrichtung des Fahrzeugs signalisiert.

Diese erfindungsgemäße Verfahrensweise ermöglicht auch Personen mit körperlichen Einschränkungen die Bedienung der Fahrzeugfunktion. Ebenfalls ist die Bedienung möglich für solche Personen, die eine bestimmte Bediengeste nicht ausführen, weil diese in deren Kulturkreis als unangemessen gilt. Geeignete Zeitdauern tₛ und tₑ liegen im Sekundenbereich, beispielsweise eine Zeitspanne tₛ von einigen Sekunden (z.B. zwischen 1 und 5 Sekunden) und eine Zeitdauer tₑ, die ebenfalls einige Sekunden beträgt (z.B. zwischen 0,5 und 3 Sekunden), um dem Benutzer ausreichend Zeit zur Reaktion zu geben und andererseits einen klaren Benutzungswillen zu erkennen.

Gemäß der Erfindung wird also die Erfassung einer Betätigung in ihrer Dynamik verlangsamt. Dazu wird vorgesehen, dass die Betätigung erkannt wird, wenn ein Benutzer in einem vorgegebenen Zeitschema ein bestimmtes Verhalten nachvollzieht. Insbesondere ist dazu das ruhende Verweilen eines Bedienkörperteils in einem Erfassungsbereich erforderlich und die Bewegung des Bedienkörperteils aus dem Erfassungsbereich nach Signalisierung durch das Fahrzeug.

Das erfindungsgemäße Verfahren ist robust gegenüber Fehlerkennungen, z.B. in Situationen, in denen Regen auf den Sensor einwirkt oder in Waschstraßen mit beweglichen Teilen. Die Betätigung ist außerdem in einfacher Weise durch Bediener erlernbar und von Fahrern jeden Alters nachvollziehbar.

In einer vorteilhaften Ausgestaltung der Erfindung erfolgt vor einer Funktionsauslösung die Abfrage eines von einem Benutzer mitführbarer ID-Gebers. Diese Abfrage erfolgt drahtlos, um eine Autorisierung für den Zugriff auf die angeforderte Funktion zu verifizieren.

Entsprechende ID-Geber sind aus dem Bereich der Keyless-Go Systeme bekannt und kommunizieren mit dem Steuersystem des Fahrzeuges drahtlos im Hochfrequenzbereich (HF), wobei ein Wecken des ID-Gebers auch im Niederfrequenzbereich erfolgen kann. Diese Kommunikation mit dem ID-Geber stellt sicher, dass eine Betätigung nur von einer autorisierten Person vorgenommen werden kann, die sich in einem vorgegebenen Bereich um das Fahrzeug aufhält. Dafür ist die Abfrage durch Antennenanordnung und Ansteuerung der Antennen regelmäßig auf einen bestimmten Fahrzeugbereich beschränkt, z.B. auf den Heckbereich, sofern die Betätigung eine Heckklappe betrifft.

Die Abfrage des ID-Gebers kann vorteilhaft davon abhängig gemacht werden, ob die erste stationäre Phase erfolgreich absolviert wurde. Dann ist die ID-Geber Abfrage der ersten Sensorerfassung nachgeordnet.

Diese Abhängigkeit ist jedoch nicht zwingend erforderlich, es kann auch eine Abfrage des ID-Gebers vor der Sensorabfrage erfolgen, z.B. durch ein wiederholtes Aussenden von Weckrufen an den ID-Geber vom Fahrzeug aus (pollendes System). In diesem Fall liegt dann die Autorisierung bereits vor, wenn die Annäherung durch den ersten Sensor erfasst wird.

Aus Gründen der Energieeinsparung und zur Vermeidung von Irritationen ist es vorteilhaft, jedoch nicht zwingend, die Abfrage des ID-Gebers vor der Aktivierung der Signaleinrichtung vorzunehmen. So erfolgt die Signalisierung nur dann, wenn die Autorisierung erfolgreich ist. Vor der Signalisierung der zweiten Phase wird dann der ID-Geber geprüft, um eine unnötige Signalisierung, ausgelöst durch unberechtigte Personen, zu verhindern.

Es ist außerdem vorteilhaft, wenn das erfindungsgemäße Verfahren derart ausgeführt und mit Parametern versehen wird, dass in der ersten Phase eine Annäherung eines Bedieners an die Sensoreinrichtung erforderlich ist, eine minimal mögliche Annäherung, z.B. eine Berührung, jedoch zum Abbruch des Verfahrens führt. Dies bedeutet, der Benutzer muss ein Körperteil, z.B. seine Hand, in die Nähe des Sensors bewegen, jedoch in geringem Abstand von z.B. 1cm bis 15cm davor verharren. Ein Sensor kann diese Annäherung verlässlich erfassen, sie aber von einer tatsächlichen Kontaktierung der Sensoreinrichtung unterscheiden. Diese Ausführungsform hat den Vorteil, dass z.B. bei einem Fahrzeughalter, der mit seinem gültigen ID-Geber hinter dem Fahrzeug steht unerwünschte Betätigungen einer dort zur Öffnung der Heckklappe angebrachten Sensoreinrichtung vermieden werden. Würde nämlich eine physische Berührung als gültige Betätigung erkannt, könnte über den Sensor fließender Regen oder ein Polierlappen die Betätigung der Heckklappe auslösen, auch wenn gar nicht gewünscht. Da diese Ausführungsform jedoch eine Annäherung ohne endgültige Berührung erfordert, wird eine solche fehlerhafte Betätigung ausgeschlossen. Für diese Ausführungsform wird lediglich eine spezifische Parametrierung oder Kalibrierung des Sensors erforderlich sein, welche die Sensorsignale für unterschiedliche Grade der Annäherung misst und einen gültigen Signalbereich für die stationäre Phase vorgibt, welcher die Berührung des Sensors ausschließt.

In einer bevorzugten Ausführungsform des Verfahrens werden kapazitive Sensoreinrichtungen verwendet, um den Annäherungssensor zu bilden. Die kapazitiven Sensoreinrichtungen haben sich insbesondere für die Erfassung von Annäherungen im Außenbereich eines Fahrzeuges bewährt, da sie eine verlässliche Funktion ermöglichen und bei unterschiedlichsten Wetterbedingungen und Umweltbedingungen verlässlich funktionieren. Außerdem liefern kapazitive Sensoreinrichtungen im Gegensatz zu optischen Sensoreinrichtungen einfach auszuwertende Signale in Gestalt von diskreten Ladungs-, Kapazitäts- oder Spannungswerten, die vergleichsweise einfachen und kostengünstigen Auswertelogiken zugeführt werden können.

Für aufwendigere Ausführungen ist jedoch auch die Verwendung einer optischen Sensoreinrichtung möglich, beispielsweise auch in Kombination mit einer kapazitiven Sensoreinrichtung. Ebenfalls sind induktive Sensoreinrichtungen einsetzbar.

Insbesondere der Bereich hinter dem Fahrzeug kann durch bereits vorhandene optische Sensoreinrichtungen, die einen mehrfachen Zweck erfüllen, zusätzlich erfasst werden, beispielswiese durch Rückfahrkameras, die dann die Funktion der zweiten Sensoreinrichtung übernehmen können.

Das erfindungsgemäße Verfahren ist für zahlreiche Bedieneinrichtungen am Fahrzeug einsetzbar, z.B. an Türgriffen, oder Bedienkomponenten im Innenraum wie dem Handschuhfach, beispielsweise auch an Schiebetüren oder motorbetriebenen Schwenktüren. Sofern diese Bedieneinrichtungen bereits über Signaleinrichtungen verfügen (z.B. Schlossbeleuchtungen, Griffbeleuchtungen oder sogenannte Vorfeldbeleuchtungen) können diese zur Signalisierung des Bedienablaufs an den Benutzer verwendet werden.

Besonders bevorzugt ist es, wenn das erfindungsgemäße Verfahren als Öffnungsbedienung einer Heckklappe des Fahrzeuges eingesetzt wird. Da das Fahrzeugheck oft als Stauraum für Zuladung dient und eine händische Bedienung der Heckklappe oft aufgrund der vom Bediener getragener Lasten unpraktisch ist, entfaltet die Bedienung in ihrer reduzierten Dynamik große Vorteile gegenüber herkömmlichen Gestenbetätigungen. Dann kann erfindungsgemäß die Betätigung über eine einfach auszuführende, verlässliche und in ihrer Dynamik gegenüber bekannten Verfahren reduzierte Betätigung mit der Hand, dem Arm, dem Fuß, der Hüfte oder dem Bein ausgeführt werden. Im vorgenannten Fall ist es sinnvoll, die Erfassungszone des Annäherungssensors in einen Bereich hinter dem Fahrzeug anzuordnen. Dort befindet sich ein Bediener, der Zugang zum Heckstauraum wünscht.

Vorzugsweise wird außerdem neben der Signalisierung des Ablaufs der Zeitdauer tₛ, also dem Signal für das Entfernen des Körperteils aus dem Erfassungsbereich, auch eine Signalisierung der bevorstehenden Öffnung des Kofferraums oder der Abdeckung vorgenommen. Dies dient als Warnsignal für den Benutzer, damit er sich ggf. aus dem Schwenkbereich der Fahrzeugklappe entfernen kann.

Es ist im Rahmen der Erfindung vorteilhaft, dem Benutzer die Signalisierung als Bedienhilfe in Gestalt einer optischen Signalisierung zu geben. Optische Signale sind für die Umgebung regelmäßig weniger störend als akustische Signale. Hierzu kann beispielsweise eine separate LED- oder eine Laserdiode eingesetzt werden. Besonders günstig ist es jedoch, vorhandene Signale des Fahrzeuges zu verwenden, also z.B. optische Signale in Gestalt von Fahrzeugleuchten (s.o.).

Eine Sensoranordnung zur Ausführung des erfindungsgemäßen Verfahrens kann an zahlreichen Positionen am Fahrzeug angeordnet werden. Die Sensoreinrichtung kann z.B. in Griffleisten integriert werden oder in Beleuchtungseinrichtungen, insbesondere im Heckbereich des Fahrzeuges. In die Kunststoffkörper von Leuchten im Heckbereich ist eine solche Sensoreinrichtung geschützt integrierbar.

Auch in Betätigungstasten am Fahrzeug kann ein Annäherungssensor mit der erfindungsgemäßen Funktionalität eingebracht werden. So ist z.B. eine Betätigung einer Heckklappe sowohl durch mechanische Druckbetätigung auslösbar, als auch durch Vollziehung des Bedienschemas, welches durch den Annäherungssensor erfasst wird.

In einer besonders vorteilhaften Ausgestaltung der Erfindung ist der Annäherungssensor in einem Fahrzeug- oder Herstelleremblem am Fahrzeug integriert. Insbesondere im Heckbereich finden sich an prominenter Stelle die Embleme der Fahrzeughersteller. Dort lassen sich Annäherungssensoren in verschiedener Gestaltung unterbringen. Für den Bediener ist nach Einweisung außerdem diese Stelle gut erreichbar und jederzeit auffindbar, was eine sichere und bequeme Bedienung ermöglicht.

In einer Weiterbildung der Erfindung ist auch die Signaleinrichtung im Emblem integriert. Das Emblem wird also z.B. mittels einer LED, ggf. in Kombination mit einem Lichtleiter oder Diffusor hinterleuchtet. Über eine solche Beleuchtung kann dann sowohl der Hinweis für eine Entfernung von dem Annäherungssensor zur Betätigung (Ablauf der Zeitdauer tₛ) gegeben werden, als auch der Hinweis auf eine bevorstehende Öffnung der Heckklappe (z.B. durch rasches Blinken oder Farbwechsel).

Es ist bevorzugt im Rahmen der Erfindung möglich, die verfahrensbestimmenden Zeitdauern tₛ, tₑ mit einer fahrzeugseitigen Bedieneinrichtung einzustellen. Dazu können Zeitschemata im Fahrzeug hinterlegt sein. Der Nutzer kann dann zwischen sehr fehlerresistenten Zeitschemata mit höherer Anforderung an die Ausführung durch den Benutzer und toleranteren Zeitschemata wählen.

Außerdem kann gemäß der Erfindung vorgesehen sein, parallel zu der Erkennung der Betätigung gemäß dem beschriebenen Verfahren die Signale auf weitere Bediengesten zu überwachen. Dieselbe Funktion kann dann durch unterschiedliche Gesten auslösbar sein. Das vorstehend beschriebene Verfahren stellt geringe Anforderungen an den Bediener, da es ihn anhand der Signalisierung durch die Bedienung leitet. Ein versierter Bediener kann hingegen eine rasch auszuführende Geste bevorzugen. Dieses Bedienschema kann insbesondere in Gestalt einer Wischgeste als alternative Bedienmöglichkeit hinterlegt sein. In diesem Fall wird bei einer charakteristischen Signaländerung parallel zu dem beschriebenen Verfahren geprüft, ob innerhalb einer vorgegebenen Zeitdauer die detektierte Annäherung bis auf einen Wert maximaler Annäherung zunimmt und anschließend rasch wieder abnimmt. Dabei wird auf einen monotonen Anstieg (oder Abfall, je nach Signal und Sensor) geachtet und eine gegenläufige monotone Rückkehr zum Ausgangswert.

Also wird parallel zu dem genannten Betätigungsverlauf ein zweiter, alternativer Betätigungsverlauf überwacht und die Betätigung wird erkannt, wenn sich die Signalantwort des Annäherungssensors von ihrem Ruhewert innerhalb einer ersten Zeitdauer tₐ um mehr als einen Schwellwert sₐ ändert, sich die Signalantwort des Annäherungssensors innerhalb der doppelten Zeitdauer 2tₐ wieder dem Ruhewert annähert und von diesem Ruhewert um weniger als den Schwellwert sₐ abweicht.

In einer Weiterbildung wird bei Überprüfung des zweiten, alternativen Betätigungsverlaufs eine Betätigung nur erkannt, wenn der Signalverlauf während der Zeitdauer 2ta für wenigstens ein Drittel dieser Zeitdauer monoton steigt und für mindestens ein Drittel dieser Zeitdauer monoton fällt.

Auf diese Weise werden dem Bediener einerseits komfortable, leicht erlernbare Gesten zur Bedienung erlaubt und andererseits effiziente, anspruchsvollere Gesten.

Auch eine Berührung der Sensoreinrichtung über eine vorgebbare Zeit oder einer Abdeckung derselben kann in das Bedienkonzept einbezogen werden, wobei eine Berührung einer maximalen Annäherung gleichzusetzen ist.

Der Erfindung wird nun anhand der beiliegenden Zeichnung näher erläutert.
Figur 1a und 1b zeigen schematisch die Anordnung für Ausführung einer Ausführungsform der Erfindung;
Figur 2 zeigt schematisch den überwachten Signalverlauf und die Zeitfenster des erfindungsgemäßen Verfahrens;
Figur 3 zeigt einen Ablaufplan einer Ausführungsform des erfindungsgemäßen Verfahrens.

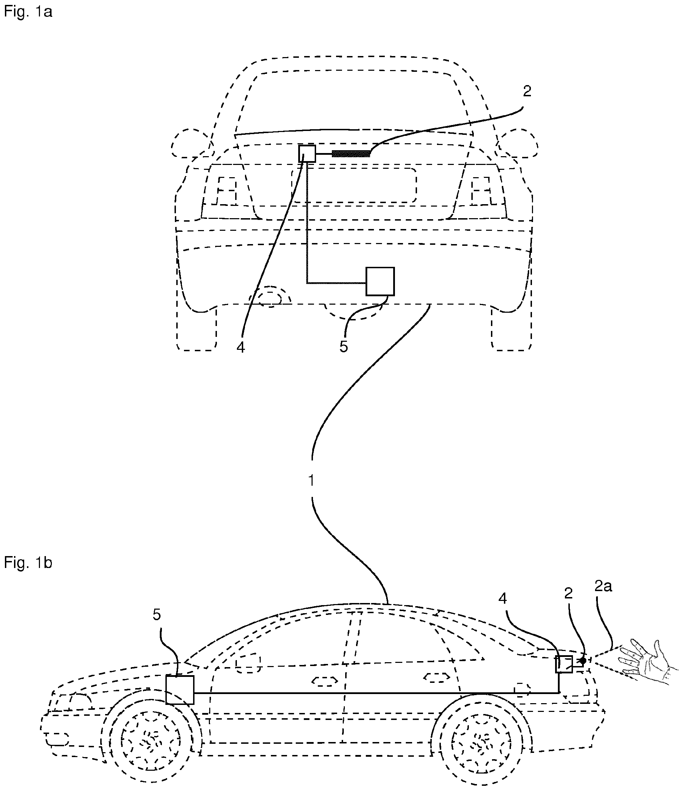

In den Figuren 1a und 1b ist ein Fahrzeug 1 gezeigt, bei dem im Heckbereich ein Annäherungssensor 2 in Gestalt einer Sensorelektrode angeordnet ist. Diese Sensorelektrode 2 ist mit einem Steuergerät 4 verbunden, welches die Sensorelektrode als kapazitive Elektrode ansteuert und periodisch deren jeweilige Kapazität ermittelt. Dieses Steuergerät 4 ist wiederum mit einem zentralen Steuergerät 5 des Fahrzeuges gekoppelt. Das Steuergerät 4 übernimmt die Ansteuerung der Elektroden 2 und die Signalauswertung, also die Ermittlung der Signalantworten und Zuordnung zu einem Bediensignal. Ein eventuell erzeugtes Bediensignal wird von der Steuereinrichtung 4 zu der zentralen Steuereinrichtung 5 übermittelt, welche die Schließfunktion der Heckklappe und die elektrische Öffnung ausführen kann.

Die Elektrode 2 ist als Komponente einer Sensoreinrichtung im oberen Heckbereich angeordnet, integriert in ein Herstelleremblem an der Heckklappe. Das Herstelleremblem ist mit einer Beleuchtungseinrichtung ausgestattet, welche als Signaleinrichtung zur Anleitung des Benutzers ausgebildet ist. Der Erfassungsbereich 2a der Sensoreinrichtung ist nach hinten gerichtet, wie in Figur 1b zu erkennen ist.

In Figur 1b ist die Hand eines Benutzers gezeigt. Die Hand kann dem Annäherungssensor 2 angenähert werden, so dass sie sich im Erfassungsbereich des Sensors befindet. Zur Betätigungserkennung ist die Hand dem Sensor 2 auf einige cm anzunähern. Wird dies getan, kommt es zu der nachfolgend beschriebenen Signalauswertung.

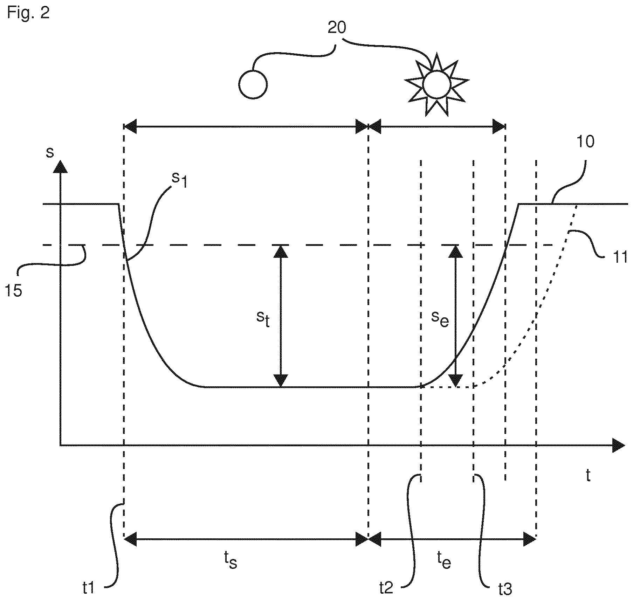

Der Signalverlauf bei dem Verfahren ist in Figur 2 dargestellt.

Es sind zwei Signalverläufe 10 und 11 dargestellt, die sich jedoch nur im hinteren zeitlichen Bereich unterscheiden. Signalverlauf 10 zeigt eine erfolgreiche Betätigung, Verlauf 11 eine nicht erfolgreiche (gescheiterte) Betätigung.

Zunächst wird bis zu einem Zeitpunkt t1 ein Signal von dem Annäherungssensor empfangen, welches einem Ruhesignal entspricht.

Zum Zeitpunkt t1 unterschreitet das Signal des Sensors einen Schwellwert 15. Die Hand des Benutzers nähert sich dem Sensor. Diese charakteristische Signaländerung s₁ triggert das weitere Verfahren. Von diesem Zeitpunkt an wird für die Zeitdauer tₛ überwacht, ob das Signal sich um mehr als einen Wert sₜ verändert, in diesem Beispiel, ob es wieder den Schwellwert 15 kreuzt. Der Benutzer muss also für eine gültige Betätigung für die Zeitdauer tₛ in einem vorgegebenen Abstandsbereich vor dem Sensor verharren. In diesem Beispiel hat der Benutzer seine Hand in einem Abstand von 1cm bis 10cm vor dem Sensor zu halten, ohne diesen jedoch vollständig zu berühren.

Der Wert sₜ ist also in diesem Beispiel die Differenz zwischen Maximalwert bei minimal erlaubter Annäherung und Schwellwert der Auslösung. Die Zeitdauer tₛ beträgt wenige Sekunden, z.B. 2 Sekunden.

Während dieser Zeit ist die Beleuchtungseinrichtung 20, welche das Herstelleremblem des Fahrzeugs hinterleuchten kann, inaktiv. Wurde während der Zeitdauer tₛ festgestellt, dass die Annäherung weitgehend stationär gehalten wurde, wird die Beleuchtungseinrichtung 20 nach Ablauf der Zeitdauer tₛ aktiviert.

Der Benutzer reagiert im Falle des Signalverlaufs 10 zum Zeitpunkt t2, also mit einer gewissen Reaktionsdauer ab der Signalisierung durch die Leuchteinrichtung 20, und entfernt seine Hand. Damit ändert sich das Signal um mehr als den Signalwert sₑ und das Signal kreuzt dadurch den Schwellwert 15 und kehrt in den Ruhezustand zurück. Da der Schwellwert 15 innerhalb des Zeitfensters tₑ gekreuzt wurde, wurde beiden Bedingungen, nämlich der stationären Phase tₛ und der dynamischen Phase tₑ Genüge getan. Es wird eine Betätigung erkannt.

Der Benutzer reagiert im Falle des Signalverlaufs 11 hingegen erst zum Zeitpunkt t3, also mit einer größeren Reaktionsdauer ab der Signalisierung durch die Leuchteinrichtung 20, und entfernt erst später seine Hand. Das Signal kreuzt dadurch den Schwellwert 15 später, nach Ablauf der Zeitdauer tₑ. Da der Schwellwert 15 außerhalb des Zeitfensters tₑ gekreuzt wurde und daher keine Signaländerung größer sₑ innerhalb von tₑ festgestellt wurde, wird keine Betätigung erkannt.

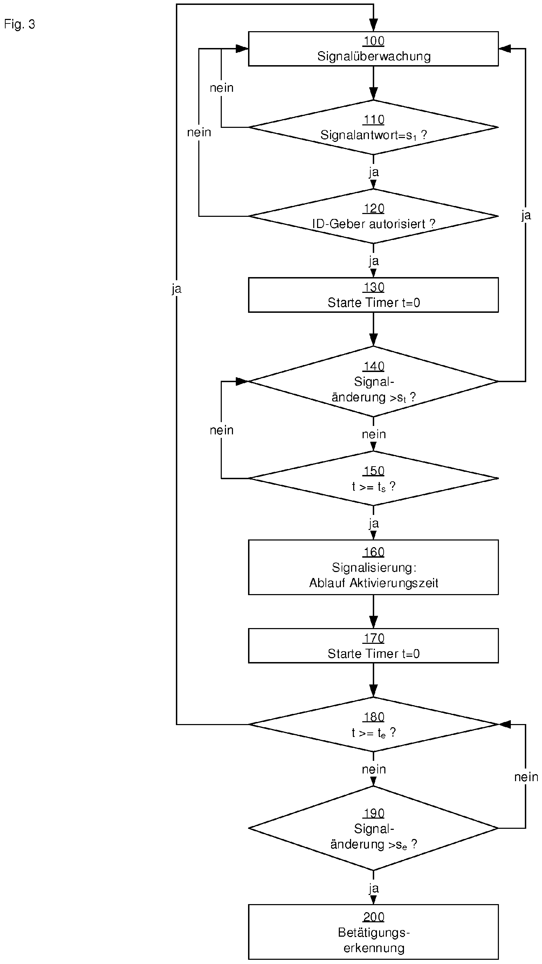

Fig. 3 zeigt ein Ablaufschema des Verfahrens.

In dieser Ausführungsform wird das Signal des kapazitiven Sensors (des Sensors 2 aus den Figuren 1a und 1b) als Trigger für das Verfahren verwendet. In Schritt 100 erfolgt eine periodische Erfassung der Sensordaten mit 100Hz. Wird in diesem Erfassungsbereich eine Annäherung detektiert, entspricht also bei Schritt 110 das Sensorsignal einer charakteristischen Antwort s1, so wird das Verfahren mit Schritt 120 fortgesetzt.

Es erfolgt bei 120 die Abfrage des ID-Gebers, welchen der Benutzer mitzuführen hat, um eine schlüssellose Betätigung durchführen zu können. Diese Abfrage erfolgt üblicherweise über Aussendung eines LF-Wecksignals vom Fahrzeug an den ID-Geber, welcher an das Fahrzeug mit einem Kommunikationsablauf im HF-Bereich antwortet. Wird die Autorisierung nicht erfolgreich durchgeführt, beispielsweise weil eine Person ohne berechtigten ID-Geber versucht die Geste auszuführen, wird das Verfahren abgebrochen.

Ist eine erfolgreiche Autorisierung erfolgt, wird bei Schritt 130 ein Zeitgeber gestartet. Mittels dieses Zeitgebers wird der Ablauf der stationären Phase mit der Dauer tₛ überwacht (Schritt 150). Während der Zeitspanne tₛ wird weiterhin periodisch das Sensorsignal ausgewertet und geprüft, ob die Annäherung aufrechterhalten wird.

Ist über die Zeitdauer tₛ die Annäherung stationär aufrechterhalten worden, wurde also die Hand nicht signifikant wegbewegt, wird in Schritt 160 die Signaleinrichtung eingeschaltet. In diesem Beispiel werden zu diesem Zweck die Bremsleuchten des Fahrzeuges eingeschaltet. Der Benutzer hinter dem Fahrzeug erkennt diese Signalisierung in bequemer Weise.

Zeitgleich mit der Signalisierung wird erneut ein Zeitgeber bei Schritt 170 gestartet und es wird in den Schritten 180 und 190 geprüft, ob innerhalb der Zeitdauer tₑ die Annäherung aufgehoben wird, also die Hand wieder entfernt wird.

Geschieht dies nicht, wird bei Schritt 180 nach Verstreichen der Zeitdauer das Verfahren abgebrochen. Wird jedoch die Signaländerung sₑ bei Schritt 190 erkannt, so wird zu Schritt 200 mit der Funktionsauslösung übergegangen.

## Patentansprüche

1. Verfahren zur Betätigungserfassung für eine Funktion an einem Kraftfahrzeug mit einer Sensoranordnung, wobei die Sensoranordnung einen Annäherungssensor zur Erfassung der Annäherung eines Bedieners umfasst,
aufweisend die Schritte,
Überwachen der Signale des Annäherungssensors auf eine Signalveränderung in Gestalt einer charakteristischen ersten Signalantwort s₁, welche eine Annäherung an den Annäherungssensor anzeigt,
Überwachen der Signale des Annäherungssensors für eine Zeitdauer tₛ, wobei das Verfahren abgebrochen wird, wenn sich die Signalantwort des Annäherungssensors innerhalb der Zeitdauer tₛ um mehr als einen vorgegebenen Wert sₜ verändert,
Aktivieren einer Signaleinrichtung nach Verstreichen der Zeitdauer tₛ, um dem Bediener den Ablauf der Betätigungszeit zu signalisieren,
Überwachen der Signale des Annäherungssensors für eine Zeitdauer tₑ, wobei das Verfahren dann fortgesetzt wird, wenn sich das Signal des Annäherungssensors innerhalb der Zeitdauer tₑ um mehr als einen vorgegebenen Wert sₑ verändert und ansonsten das Verfahren abgebrochen wird,
wenn das Verfahren fortgesetzt wird, Feststellen der Betätigung der Funktion an dem Kraftfahrzeug und Signalisieren der Funktionsauslösung an eine Steuereinrichtung in dem Kraftfahrzeug.

2. Verfahren nach Anspruch 1, wobei vor einer Funktionsauslösung ein von einem Benutzer mitführbarer ID-Geber drahtlos abgefragt wird, um eine Autorisierung für den Zugriff auf die angeforderte Funktion zu verifizieren.

3. Verfahren nach Anspruch 2, wobei die Abfrage des ID-Gebers vor der Aktivierung der Signaleinrichtung erfolgt und das Verfahren nur dann fortgesetzt wird, wenn die Autorisierung erfolgreich ist.

4. Verfahren nach einem der vorangehenden Ansprüche, wobei als Annäherungssensor ein kapazitiver Sensor verwendet wird.

5. Verfahren nach einem der vorangehenden Ansprüche, wobei als Signaleinrichtung eine optische Signaleinrichtung verwendet wird.

6. Verfahren nach Anspruch 5, wobei die Sensoreinrichtung in ein Fahrzeugemblem integriert wird.

7. Verfahren nach Anspruch 6, wobei eine Emblembeleuchtung als Signaleinrichtung verwendet wird.

8. Verfahren nach einem der Ansprüche 1 bis 4, wobei als Signaleinrichtung eine akustische Signaleinrichtung oder eine Signaleinrichtung mit taktiler Rückmeldung verwendet wird.

9. Verfahren nach einem der Ansprüche 5 oder 8, wobei die Sensoreinrichtung in einen Türgriff oder einen Tastschalter oder eine Abdeckung, insbesondere eine Tankabdeckung integriert wird.

10. Verfahren nach einem der vorangehenden Ansprüche, wobei die auszulösende Funktion eine Öffnung der Heckklappe des Kraftfahrzeuges bewirkt.

11. Verfahren nach einem der vorangehenden Ansprüche, wobei wenigstens eine der Zeitdauern tₑ und tₛ über eine Bedienereingabe, vorzugsweise an einer zentralen Bedieneinheit des Fahrzeuges einstellbar ist.

12. Verfahren nach einem der vorangehenden Ansprüche, wobei parallel zu dem genannten Betätigungsverlauf ein zweiter, alternativer Betätigungsverlauf überwacht wird, wobei eine Betätigung erkannt wird, wenn
sich die Signalantwort des Annäherungssensors von ihrem Ruhewert innerhalb einer ersten Zeitdauer tₐ um mehr als einen Schwellwert sₐ ändert,
sich die Signalantwort des Annäherungssensors innerhalb der doppelten Zeitdauer 2tₐ wieder dem Ruhewert annähert und von diesem Ruhewert um weniger als den Schwellwert sₐ abweicht.

13. Verfahren nach Anspruch 12, wobei bei Überprüfung des zweiten, alternativen Betätigungsverlaufs eine Betätigung nur erkannt wird, wenn der Signalverlauf während der Zeitdauer 2tₐ für wenigstens ein Drittel dieser Zeitdauer monoton steigt und für mindestens ein Drittel dieser Zeitdauer monoton fällt.

14. Verfahren nach einem der vorangehenden Ansprüche, wobei die Zeitdauer tₛ weniger als vier Sekunden, bevorzugt weniger als drei Sekunden beträgt.

15. Verfahren nach einem der vorangehenden Ansprüche, wobei die Zeitdauer tₑ weniger als drei Sekunden, bevorzugt weniger als zwei Sekunden beträgt.

## Claims

1. A method for actuation detection for a function on a motor vehicle using a sensor arrangement, wherein the sensor arrangement comprises a proximity sensor for detecting the approach of a user,
having the steps,
monitoring the signals of the proximity sensor for a signal change in the form of a characteristic first signal response s₁, which indicates an approach to the proximity sensor,
monitoring the signals of the proximity sensor for a time period tₛ, wherein the method is terminated if the signal response of the proximity sensor changes by more than a predetermined value sₜ within the time period tₛ,
activating a signalling device after the elapse of the time period tₛ, in order to signal the expiry of the actuation time to the user,
monitoring the signals of the proximity sensor for a time period tₑ, wherein the method is continued then if the signal of the proximity sensor changes by more than a predetermined value sₑ within the time period tₑ and otherwise, the method is terminated,
if the method is continued, identifying the actuation of the function on the motor vehicle and signalling the function triggering to a control device in the motor vehicle.

2. The method according to claim 1, wherein prior to function triggering, an ID transponder, which can be carried by a user, is queried wirelessly in order to verify an authorization for access to the requested function.

3. The method according to claim 2, wherein the querying of the ID transponder takes place prior to the activation of the signalling device and the method is only continued if the authorization is successful.

4. The method according to one of the preceding claims, wherein a capacitive sensor is used as proximity sensor.

5. The method according to one of the preceding claims, wherein an optical signalling device is used as signalling device.

6. The method according to claim 5, wherein the sensor device is integrated into a vehicle badge.

7. The method according to claim 6, wherein a badge light is used as signalling device.

8. The method according to one of claims 1 to 4, wherein an acoustic signalling device or a signalling device with tactile feedback is used as signalling device.

9. The method according to one of claims 5 or 8, wherein the sensor device is integrated into a door handle or a momentary-contact switch or a cover, particularly a tank cover.

10. The method according to one of the preceding claims, wherein the function to be triggered effects an opening of the tailgate of the motor vehicle.

11. The method according to one of the preceding claims, wherein at least one of the time periods tₑ and tₛ can be set by means of a user input, preferably on a central control unit of the vehicle.

12. The method according to one of the preceding claims, wherein parallel to the actuation process mentioned, a second alternative actuation process is monitored, wherein an actuation is detected if
the signal response of the proximity sensor changes from its resting value by more than a threshold value sₐ within a first time period tₐ,
the signal response of the proximity sensor approaches the resting value again within double the time period 2tₐ and deviates from this resting value by less than the threshold value sₐ.

13. The method according to claim 12, wherein, when investigating the second alternative actuation process, an actuation is only identified if, during the time period 2tₐ, the signal curve monotonously increases for at least a third of this time period and monotonously falls for at least a third of this time period.

14. The method according to one of the preceding claims, wherein the time period tₛ is less than four seconds, preferably less than three seconds.

15. The method according to one of the preceding claims, wherein the time period tₑ is less than three seconds, preferably less than two seconds.

## Revendications

1. Procédé permettant de détecter un actionnement d'une fonction sur un véhicule automobile avec un système de capteur, le système de capteur comprenant un détecteur de proximité pour la détection de l'approche d'un utilisateur,
comportant les étapes de
contrôle des signaux du détecteur de proximité sur une variation de signaux dans la structure d'une première réponse de signalisation caractéristique s₁, laquelle affiche une proximité sur le détecteur de proximité,
contrôle des signaux du détecteur de proximité pour une durée tₛ, le procédé étant interrompu, si la réponse de signalisation du détecteur de proximité varie à l'intérieur de la durée tₛ de plus d'une valeur prédéfinie sₜ,
activation d'un dispositif de signalisation après écoulement de la durée tₛ pour signaler à l'utilisateur l'expiration du temps d'actionnement,
contrôle des signaux du détecteur de proximité pour une durée tₑ, le procédé se poursuivant ensuite, si le signal du détecteur de proximité varie à l'intérieur de la durée tₑ de plus d'une valeur sₑ prédéfinie et sinon le procédé étant interrompu,
si le procédé se poursuit, constatation de l'actionnement de la fonction sur le véhicule automobile et signalisation du déclenchement de fonction à un dispositif de commande dans le véhicule automobile.

2. Procédé selon la revendication 1, avant un déclenchement de fonction un indicateur d'ID (identification) portable étant interrogé sans fil par un utilisateur pour vérifier une autorisation pour l'accès à la fonction demandée.

3. Procédé selon la revendication 2, l'interrogation de l'indicateur d'ID ayant lieu avant l'activation du dispositif de signalisation et le procédé ne se prolongeant ensuite que si l'autorisation est réussie.

4. Procédé selon l'une quelconque des revendications précédentes, un capteur capacitif étant utilisé comme détecteur de proximité.

5. Procédé selon l'une quelconque des revendications précédentes, un dispositif de signalisation optique étant utilisé comme dispositif de signalisation.

6. Procédé selon la revendication 5, le dispositif de détection étant intégré dans un emblème de véhicule.

7. Procédé selon la revendication 6, un éclairage d'emblème étant utilisé comme dispositif de signalisation.

8. Procédé selon l'une quelconque des revendications 1 à 4, un dispositif de signalisation acoustique ou un dispositif de signalisation avec acquittement tactile étant utilisé comme dispositif de signalisation.

9. Procédé selon l'une quelconque des revendications 5 ou 8, le dispositif de détection étant intégré dans une poignée de porte ou un bouton-poussoir ou un capotage, notamment une couverture de réservoir.

10. Procédé selon l'une quelconque des revendications précédentes, la fonction à déclencher entraînant une ouverture du capot de coffre du véhicule automobile.

11. Procédé selon l'une quelconque des revendications précédentes, au moins une des durées tₑ et tₛ pouvant être réglée par une introduction d'utilisateur, de préférence sur une unité de commande centrale du véhicule automobile.

12. Procédé selon l'une quelconque des revendications précédentes, un deuxième procédé d'actionnement alternatif étant contrôlé parallèlement au procédé d'actionnement cité, un actionnement étant identifié, si
la réponse de signalisation du détecteur de proximité varie de sa valeur au repos à l'intérieur d'une première durée tₐ de plus d'une valeur seuil sₐ,
la réponse de signalisation du détecteur de proximité approche à nouveau la valeur au repos à l'intérieur de la durée double 2tₐ et s'écarte de cette valeur au repos inférieurement à la valeur seuil sₐ.

13. Procédé selon la revendication 12, un actionnement n'étant identifié lors du contrôle du deuxième procédé d'actionnement alternatif que si le procédé de signalisation pendant la durée 2tₐ augmente de façon monotone pour au moins un tiers de cette durée et tombe de façon monotone pour au moins un tiers de cette durée.

14. Procédé selon l'une quelconque des revendications précédentes, la durée tₛ étant inférieure à quatre secondes, de préférence inférieure à trois secondes.

15. Procédé selon l'une quelconque des revendications précédentes, la durée tₑ étant inférieure à trois secondes, de préférence inférieure à deux secondes.
